# FASCICULE DE BREVET EUROPEEN

(11) **EP 2 007 541 B1**
(45) Date de publication et mention de la délivrance du brevet: **02.05.2012**
(21) Numéro de dépôt: 07731213.0
(22) Date de dépôt: 28.03.2007
(51) Int. Cl.: B23K 9/028, B23K 37/02, B23K 37/053

(54) **SUPPORT DIT ORBITAL COMPRENANT AU MOINS DEUX PIÈCES EN FORME DE SEGMENT DE CERCLE RACCORDABLES L'UNE À L'AUTRE; DISPOSITIF DE SOUDAGE BOUT À BOUT DE CONDUITS POUR FORMER UNE CANALISATION DE TYPE PIPELINE COMPRENANT UN TEL SUPPORT ORBITAL**
ORBITALTRÄGER MIT MINDESTENS ZWEI KOMPONENTEN IN FORM VON KREISSEGMENTEN, DIE MITEINANDER VERBUNDEN WERDEN KÖNNEN, VORRICHTUNG ZUM STUMPFSCHWEISSEN VON ROHREN ZUR BILDUNG EINER SOLCH EINEN ORBITALTRÄGER UMFASSENDEN ROHRLEITUNG
ORBITAL CARRIER COMPRISING AT LEAST TWO COMPONENTS IN THE FORM OF SEGMENTS OF A CIRCLE ABLE TO BE CONNECTED TOGETHER; DEVICE FOR BUTT-WELDING PIPES TO FORM A PIPELINE COMPRISING SUCH AN ORBITAL CARRIER

(30) Priorité: 28.03.2006 FR 0602672; 05.10.2006 FR 0608756
(43) Date de publication de la demande: 31.12.2008
(73) Titulaire: Serimax, 77290 Mitry-Mory (FR)
(72) Inventeur: DUPONT, Thierry, F-60330 Lagny Le Sec (FR); DESTOUCHES, Denis, F-02600 Dampleux (FR); TIGIEN, Cyril, F-91150 Morigny Champigny (FR)
(74) Mandataire: Fosse, Danièle
(86) Numéro de dépôt international: PCT/FR2007/000532
(87) Numéro de publication internationale: WO 2007/110514

(56) Documents cités:
- GB-A- 1 465 959
- JP-A- 55 114 494
- US-A- 3 102 187
- US-A- 4 145 593
- US-A- 4 336 436
- US-A- 5 171 954
- US-A1- 2002 153 406

## Description

La présente invention concerne un support orbital pour un dispositif de soudage orbital de conduits mis bout à bout pour la réalisation de canalisations de type pipeline destinées au transport de fluides ou de gaz conformément au preambule des revendications 1 et 5 (voir, par exemple US 3 102 187).

Lors de la réalisation de pipeline, les conduits sont disposés bout à bout et raccordés par soudage. Cette opération de soudage peut être réalisée manuellement ou à l'aide de dispositifs de soudage automatisés. Dans la perspective de pouvoir réaliser le plus rapidement possible l'opération de soudage, les dispositifs automatisés sont préférés et comprennent généralement au moins un chariot de soudage supportant au moins une tête de soudage susceptible de se déplacer de manière orbitale le long du plan de joint entre les conduits.

Le dispositif de soudage comporte également des moyens de positionnement et/ou des moyens d'entraînement en déplacement de la ou des électrodes le long du chanfrein entre les conduits à souder, ces moyens permettant notamment de déplacer et de guider de manière orbitale le chariot supportant la tête de soudage le long du plan de joint pour réaliser le soudage. De tels moyens peuvent notamment être constitués d'un support dit orbital entourant les conduits et le long duquel se déplace le chariot autour des conduits à souder. Un tel support circulaire est en outre entraînable en déplacement le long de la canalisation formée jusqu'à la nouvelle liaison entre conduits à souder.

Un tel support orbital est donc agencé de manière à permettre d'une part le positionnement et l'entraînement en déplacement du ou des chariots de soudage le long du chanfrein entre les conduits à souder et d'autre part son déplacement en translation le long de la canalisation formée de manière à être positionné au niveau du plan de joint de deux nouveaux conduits à souder.

Bien que ce type de support orbital permette notamment d'utiliser plusieurs chariots de soudage pour réaliser la soudure entre les conduits, il présente aussi un inconvénient dans la mesure où il n'est pas toujours utilisable en fonction des canalisations à former.

En effet, la canalisation réalisée peut comporter à sa périphérie des éléments tels que tête de dépose, T de raccordement, vannes et similaires qui sont pré installés sur les conduits à souder et qui encombrent la périphérie de la canalisation, en particulier en partie supérieure de ladite canalisation et éventuellement sur les côtés également. On s'est alors aperçu que le support orbital pouvait être bloqué en déplacement le long de la canalisation à cause de la présence de ces éléments. De ce fait, on est alors obligé d'avoir recours à des dispositifs de soudage déposables.

En variante, on a proposé de pouvoir ouvrir le support orbital pour le déplacer. Ainsi, on a proposé dans US 4 145 593, une station de soudage pour conduits comportant un dispositif de chemin pour le dispositif de soudage constitué de deux demi-chemins à la manière d'une « pince » suspendue au-dessus du conduit à former. Toutefois, chaque partie de pince entoure ledit conduit mais il n'y a pas fermeture de la pince pour former un support tout autour du plan de joint à souder. Un tel dispositif est par ailleurs suspendu au-dessus du conduit à souder à l'aide d'un rail.

Dans US 3 102 187 ; on a décrit un support orbital constitué de deux pièces en arc de cercles reliées à une extrémité autour d'un point de pivotement situé au-dessus du conduit en formation à la manière d'une pince. Lors de l'entraînement en pivotement des deux pièces, le support orbital s'ouvre par le dessous du conduit en formation. Un tel support orbital fait partie d'un ensemble tracteur déplaçable le long du conduit mais qui se trouve principalement placé au-dessus dudit conduit. Pour passer d'un chanfrein à souder à l'autre, on ouvre le support orbital par pivotement des deux segments de cercle. Ainsi, dans ce dispositif aussi, on se déplace au-dessus du conduit et on ouvre et ferme le support orbital par le dessous du conduit en formation.

Dans US 4 336 436, on a décrit également un support orbital de soudage qui est suspendu depuis le dessus du conduit et qui est constitué de deux pièces en segment de cercle écartables l'une de l'autre par pivotement autour d'un point d'articulation situé au-dessus dudit conduit en formation, le support s'ouvrant donc là encore par le dessous.

Ces supports bien qu'entourant la canalisation en formation pour guider au moins une torche de soudage et s'ouvrant, ne peuvent pas être utilisés sur des conduits qui présentent un encombrement principalement en partie supérieure comme cela est souvent le cas dans les conduits actuels pré-fabriqués.

En outre, il n'est pas possible d'envisager un agrandissement du diamètre du support orbital permettant de dépasser les obstacles car alors il serait nécessaire d'allonger les bras portant les têtes de soudage ce qui entraînerait un manque de précision dans le soudage effectué.

Ainsi, dans JP 55 114494 on a proposé un support orbital pour un dispositif de soudage qui entoure le plan de joint et qui est relié à une plate-forme roulante permettant de déplacer ledit support orbital le long du conduit en formation. Toutefois, ce support orbital est relativement éloigné du plan de joint et maintient donc une certaine distance par rapport à celui-ci. De ce fait, il s'ensuit un risque d'imprécision du positionnement de la torche de soudage. Le support est en outre circulaire et constitué de deux parties articulées l'une par rapport à l'autre autour d'un point de pivotement ménagé au-dessus du conduit, l'une des parties étant montée fixe sur la plate-forme roulante situé au-dessous du conduit. Par conséquent, l'ouverture du support ne génère de l'espace que d'un côté. Par conséquent si un encombrement survient des deux côtés et/ou au-dessus du conduit en formation, un tel dispositif n'est pas utilisable.

Afin de pallier ces inconvénients, la présente invention a pour but de proposer un support orbital pour un dispositif de soudage de conduits mis bout à bout qui permet de réaliser un soudage le plus précis possible et qui peut être entraîné en déplacement le long de la canalisation formée quel que soit l'encombrement, à la surface desdits conduits, notamment en partie supérieure de ceux-ci, approximativement l'encombrement pouvant se situer sur la moitié supérieure de la périphérie dudit conduit.

A cet effet, l'invention a pour objet un support dit orbital pour un dispositif de soudage de conduits à souder bout à bout pour former une canalisation de type pipeline, tel que définit dans les revendications 1 et 5.

Ainsi de manière avantageuse, l'ouverture du support orbital lui permet de passer les obstacles présents au moins en partie supérieure dudit conduit, cette possibilité d'ouverture n'étant de préférence utilisée que, lorsqu'un obstacle doit être surmonté. Ainsi, si un obstacle survient dans la périphérie supérieure du conduit, il suffit d'ouvrir le support orbital au moins en partie supérieure pour pouvoir passer l'obstacle et, une fois l'obstacle dépassé, on referme le support orbital qui se trouve alors de préférence au plus près de la périphérie du conduit.

Un support orbital selon l'invention permet donc de conserver tous les avantages liés à un dispositif de soudage automatisé se déplaçant le long de la canalisation en formation, comportant au moins un chariot de soudage, de préférence de deux à huit chariots de soudage, se déplaçant le long dudit support orbital pour réaliser une soudure entre des conduits et ce, même pour des conduits présentant des éléments pré-installés notamment à leur périphérie supérieure.

Ainsi de manière avantageuse, le dispositif de soudage porté par un support orbital selon l'invention qui se trouve au plus près du conduit en formation, peut être déplacé le long d'une canalisation en formation par le simple entraînement en translation dudit support orbital, par la barge, le long de ladite canalisation mais en outre, le support orbital de l'invention qui peut être ouvert au moins dans sa partie supérieure au-dessus dudit conduit, permet le passage des conduits qui peuvent parfois présenter un encombrement périphérique le plus souvent en partie supérieure du conduit, ce qui n'était pas le cas des supports de l'état de la technique. De préférence, le support orbital selon l'invention est porté par des moyens porteurs entraînables en translation le long de la canalisation en formation.

Selon une première forme de réalisation de l'invention (voir revendication 1) le support orbital est constitué de deux pièces en forme de demi-cercle, raccordables l'une à l'autre pour former le support orbital autour des conduits à souder pendant une phase de soudage et écartables l'une de l'autre pour permettre l'ouverture du support orbital, les deux pièces en forme de demi-cercle pouvant être alors entraînées en translation le long de la canalisation en formation, de manière écartée par rapport à celle-ci, notamment pour dépasser un encombrement à la périphérie du conduit.

Selon une variante de réalisation préférée de l'invention, l'ouverture et la fermeture s'effectuent dans un plan perpendiculaire au plan dans lequel s'étend la canalisation en formation. Ainsi, lorsque la canalisation en formation s'étend dans un plan horizontal, chaque pièce en demi-cercle est positionnée avec ses extrémités libres au-dessus et au-dessous des conduits à souder et, ainsi, les deux pièces sont écartables de chaque côté de la canalisation en formation. Ainsi, on libère de l'espace au niveau de la partie supérieure du conduit, mais également de fait sur les côtés.

Chaque pièce en demi-cercle comportant des moyens de guidage et d'entraînement en déplacement du ou des chariots de soudage, il est donc indispensable que la liaison entre les deux pièces pour former le support orbital soit parfaite, le ou les chariots de soudage ne devant pas être perturbés dans leur déplacement au niveau de la liaison entre les pièces. Ainsi, chaque pièce en forme de demi-cercle est pourvue à ses extrémités non seulement de moyens de raccordement et, optionnellement de verrouillage, permettant de fermer le support orbital mais en outre, on prévoit des moyens permettant un positionnement et un alignement parfaits des pièces l'une par rapport à l'autre, tels que des moyens de guidage complémentaires.

De préférence, les deux pièces en demi-cercle sont également entraînables en rotation, de telle sorte qu'une fois le support orbital ouvert par l'écartement des deux pièces en demi-cercles celles-ci sont entraînées en rotation de manière à s'étendre le long du conduit. On limite ainsi avantageusement, l'écartement nécessaire entre les deux pièces.

Selon l'invention, le support orbital est constitué d'au moins deux pièces en forme de segments de cercle, l'un des segments de cercle, dit fixe recevant au moins à l'une de ses extrémités, montée à pivotement une extrémité d'un autre segment de cercle dit mobile, l'extrémité opposée du segment dit mobile étant au moins raccordable sur l'extrémité libre du segment de cercle dit fixe pour former le support orbital et écartable de ladite extrémité libre du segment de cercle fixe pour ouvrir ledit support au moins en partie supérieure dudit support, lors de l'entraînement en pivotement dudit segment mobile vers l'extérieur du support orbital. L'axe de pivotement entre les deux segments de cercle est positionné de sorte que le pivotement du segment de cercle mobile ouvre le support au-dessus du conduit et libère ainsi au moins la partie supérieure du conduit qui présente généralement un encombrement.

Ainsi pour passer de la position fermée en phase de soudage à une position ouverte, on entraîne en pivotement le segment de cercle mobile par rapport au segment fixe.

Selon une (deuxieme forme) réalisation de l'invention (voir revendication 5), le support mobile comporte au moins trois segments de cercle, un segment de cercle dit fixe étant positionné de manière à constituer la partie inférieure du support orbital logée sous la canalisation en formation et l'extrémité d'un segment de cercle dit mobile étant montée à pivotement à chacune des extrémités dudit segment de cercle fixe, leurs extrémités opposées étant raccordables l'une à l'autre, de préférence dans la partie supérieure du support orbital, au-dessus de la canalisation en formation, pour former et fermer le support orbital et écartables l'une de l'autre pour ouvrir ledit support en partie supérieure par l'entraînement en pivotement des deux segments de cercles mobiles par rapport au segment de cercle fixe, vers l'extérieur du support orbital.

De préférence, on peut prévoir également que le segment de cercle fixe est constitué de deux segments de cercles respectivement écartables l'un de l'autre en translation de part et d'autre de la canalisation. Cette forme de réalisation facilite avantageusement la mise en place et le retrait du support orbital et peut permettre également de libérer encore plus les côtés du conduit si nécessaire.

Chaque pièce en forme de segment de cercle comportant des moyens de guidage et d'entraînement en déplacement du ou des chariots de soudage, il est donc indispensable que la liaison entre les pièces pour former le support orbital soit parfaite, le ou les chariots de soudage ne devant pas être perturbés dans leur déplacement au niveau de la liaison entre les pièces. Ainsi, chaque pièce en forme de segment de cercle est pourvue au moins à une extrémité, non seulement de moyens de raccordement et, optionnellement de verrouillage permettant de fermer le support orbital mais en outre, on prévoit des moyens permettant un positionnement et un alignement parfaits des pièces l'une par rapport à l'autre, tels que des moyens de guidage complémentaires, lors de leur raccordement par pivotement. De même, les moyens assurant le pivotement sont réalisés de manière à positionner et à aligner parfaitement les segments de cercle l'un par rapport à l'autre.

On décrira maintenant l'invention plus en détail en référence au dessin dans lequel :
La figure 1 représente une vue en perspective latérale avant d'un dispositif de soudage comportant un support orbital selon la première forme de réalisation de l'invention, en phase de production ;

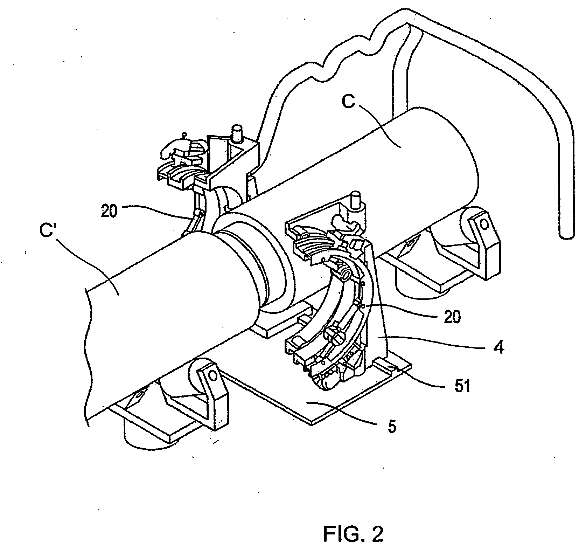

La figure 2 représente une vue en perspective latérale arrière du dispositif de soudage de la figure 1 après ouverture du support orbital pour passer des éléments encombrants à la périphérie des conduits;

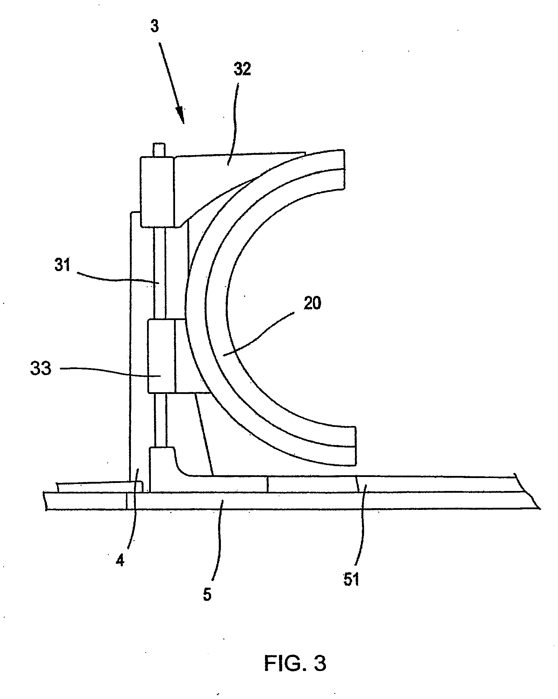

La figure 3 représente une vue en plan d'une pièce en demi-cercle constituant le support orbital ; et
La figure 4 représente une vue en plan d'un support orbital selon la seconde forme de réalisation de l'invention.

Le dispositif de soudage représenté dans les figures comporte plusieurs chariots de soudage 1 portant respectivement au moins une tête de soudage 6 pourvue d'au moins une torche de soudage. Ce dispositif de soudage permet de réaliser un soudage entre des conduits à souder pour former une canalisation de type pipeline s'étendant dans un plan horizontal.

De manière à automatiser le soudage, les chariots de soudage 1 sont entraînés en déplacement le long de rails de guidage ménagés sur un support orbital 2, 7 entourant les conduits C, C' à souder au niveau de leur plan de joint. Ces chariots de soudage 1 sont entraînables en déplacement radial vers les conduits C, C' pour réaliser le soudage et les têtes de soudage 6 sont remontées une fois le soudage achevé.

Ce support orbital 2 est constitué de deux pièces en forme de demi-cercle 20 raccordables l'une à l'autre de manière parfaitement alignée, mais également entraînables en écartement l'une par rapport à l'autre.

Ainsi, chaque pièce 20 est portée conformément à la premiére forme de l'invention par une potence 3 constituée d'un montant vertical 31 et d'une traverse 32 à l'extrémité de laquelle la partie supérieure de la pièce 20 en demi-cercle est fixée. La partie sensiblement inférieure de la pièce 20 est raccordée elle aussi au montant 31 par une pièce 33. Le montant vertical 31 est monté entraînable en pivotement sur un pied 4 qui est lui-même monté sur des moyens porteurs tel qu'un socle 5. Le socle 5 est agencé pour s'étendre sous les conduits à souder C, C' perpendiculairement auxdits conduits et présente un rail de guidage 51 s'étendant également perpendiculairement à l'axe longitudinal desdits conduits C, C'. Sur ce rail de guidage 51 sont montés entraînables en déplacement le long dudit rail 51, de part et d'autre des conduits, chaque pied 4 portant une potence 3.

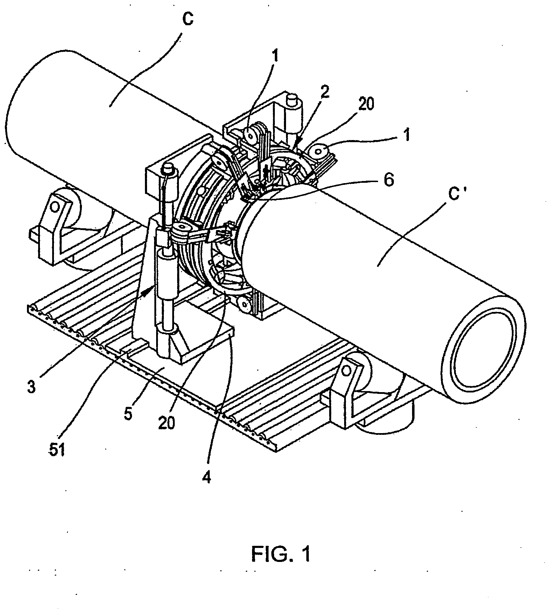

Au cours de la phase de soudage, le support orbital 2 est constitué des deux pièces en demi-cercle 20 raccordées l'une à l'autre de sorte que les chariots de soudage peuvent être guidés le long du support orbital 2 pour réaliser le soudage (voir la figure 1).

Une fois la phase de soudage achevée entre deux conduits C, C', il convient d'amener le dispositif de soudage en regard d'un nouveau plan de joint entre deux conduits à souder C', C". Lorsque le conduit C' dont une extrémité vient d'être soudée à la canalisation en formation ne présente aucun encombrement périphérique, le dispositif de soudage est simplement entraîné en translation à l'aide du socle 5, le long dudit conduit C' jusqu'au nouveau plan de joint entre le conduit C' et le nouveau conduit C" à souder.

Si le conduit C' présente un encombrement périphérique lié à la présence de vannes par exemple, pour effectuer le déplacement du dispositif de soudage, on ouvre le support orbital 2, c'est-à-dire qu'on déverrouille la liaison entre les deux pièces 20 et on sépare celles-ci par l'entraînement en écartement desdites pièces 20 de part et d'autre des conduits C, C', déjà soudés. Cet écartement des pièces 20 est réalisé par l'entraînement en déplacement des pieds 4 sur le rail de guidage 51 du socle 5 dans le sens d'un écartement par rapport aux conduits.

Une fois les pièces 20 écartées des conduits C, C' soudés, on entraîne en pivotement chaque potence 3 par rapport au pied 4 de sorte que chaque pièce 20 s'étend le long des conduits C, C' ce qui limite l'encombrement de l'ensemble et l'écartement des pièces 20. Puis on entraîne en déplacement le support orbital 2 ainsi ouvert le long de la canalisation en formation pour l'amener au-delà de l'encombrement périphérique rencontré lié à la présence de vannes.

Une fois cet obstacle dépassé, les potences 3 sont de nouveau entraînées en pivotement par rapport au pied 4 pour amener les pièces 20 en regard l'une de l'autre, de part et d'autre des conduits à souder C', C" et on entraîne en déplacement les pieds 4 sur le rail de guidage 51 du socle 5 pour procéder au raccordement des pièces 20, c'est-à-dire pour refermer le support orbital 2 pour procéder à la phase de soudage, à l'aide de moyens de raccordement et de verrouillage appropriés prévus à chaque extrémité des pièces 20. Puis, on peut procéder de manière habituelle au déplacement du dispositif de soudage.

De préférence de manière à garantir un alignement parfait des pièces 20, on prévoit sur chacune des moyens de guidage complémentaires permettant un positionnement aligné des pièces 20 une fois raccordées l'une à l'autre. Ainsi, on peut prévoir au moins un organe mâle et au moins un organe femelle de guidage en regard sur chaque extrémité de la pièce en demi-cercle 20.

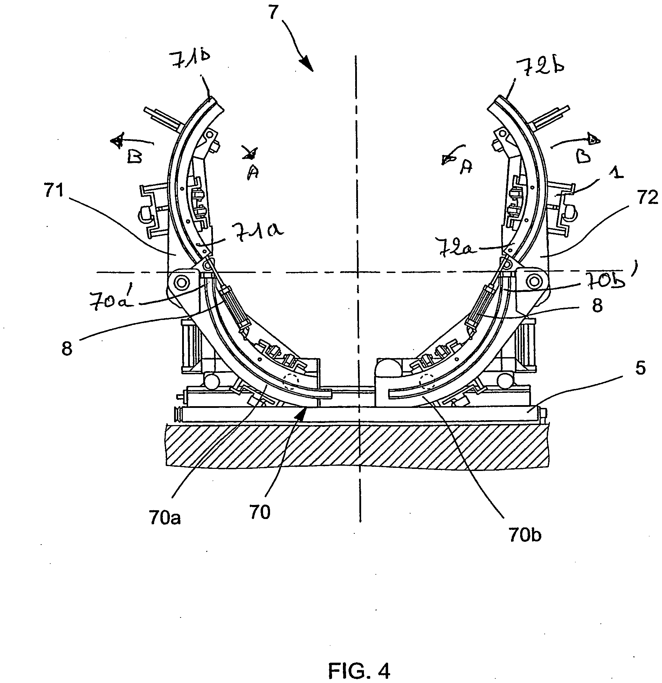

Comme on peut le voir à la figure 4, le support orbital 7 est constitué de trois pièces en forme de segment de cercle qui raccordées les unes aux autres forment ledit support orbital 7. Une première pièce appelée segment de cercle 70 fixe est montée sur des moyens porteurs tel que le socle 5 qui est agencé pour s'étendre sous les conduits à souder C, C' perpendiculairement auxdits conduits. Les deux autres pièces sont appelés segments de cercle 71 et 72 mobiles.

A chaque extrémité 70a', 70b' du segment de cercle fixe 70 est montée, entraînable en pivotement, une extrémité 71a, 72a d'un segment de cercle 71, 72 mobile, l'extrémité opposée 71b, 72b de chaque segment mobile 71, 72 étant raccordables l'une à l'autre.

Au niveau des extrémités 70a', 70b' du segment fixe 70, on prévoit des moyens d'entraînement en pivotement d'un segment de cercle 71, 72 mobile, entre une position de fermeture du support orbital 7 et une position ouverte de celui-ci dans la partie supérieure dans laquelle les segments de cercle mobiles 71, 72 ont été écartés l'un de l'autre par entraînement en pivotement vers l'extérieur (flèche A) du support orbital comme on peut le voir sur la figure 4. L'emplacement de l'axe de pivotement des segments 71 et 72 sur les extrémités 70a' et 70b' peut être choisi de manière avantageuse en fonction de l'espace libéré autour du conduit lors de l'ouverture du support 7 que l'on souhaite obtenir. Dans la figure 4, les axes de pivotement se situent sensiblement diamétralement opposés à mi hauteur du support 7.

Ces moyens qui permettent l'entraînement en pivotement peuvent notamment être constitués de vérins 8.

En outre, le socle 5 conformément à la deuxiéme forme de l'invention présente un rail de guidage 51 s'étendant également perpendiculairement à l'axe longitudinal desdits conduits C, C'. Sur ce rail de guidage 51 sont montés, entraînables en déplacement le long dudit rail 51, de part et d'autre des conduits, deux segments de cercle 70a et 70 b qui, raccordés l'un à l'autre forment le segment de cercle 70 dit fixe.

Au cours de la phase de soudage, le support orbital 7 est constitué des trois pièces en forme de segments de cercle 70, 71 et 72 raccordées l'une à l'autre ou des quatre pièces 70a, 70b, 71 et 72 pourvues respectivement de moyens de guidage de sorte que les chariots de soudage peuvent être guidés le long du support orbital 7 pour réaliser le soudage.

Une fois la phase de soudage achevée entre deux conduits C, C', il convient d'amener le dispositif de soudage en regard d'un nouveau plan de joint entre deux conduits à souder C', C". Lorsque le conduit C' dont une extrémité vient d'être soudée à la canalisation en formation ne présente aucun encombrement périphérique, le dispositif de soudage est simplement entraîné en translation à l'aide du socle 5, le long dudit conduit C' jusqu'au nouveau du plan de joint entre le conduit C' et le nouveau conduit C" à souder.

Si le conduit C' présente un encombrement périphérique lié à la présence de vannes par exemple, pour effectuer le déplacement du dispositif de soudage, on ouvre le support orbital 7, c'est-à-dire qu'on déverrouille la liaison entre les deux segments de cercle 71,72 mobiles et on sépare ceux-ci par l'entraînement en pivotement desdits segments de cercle mobiles 71, 72 par rapport au segment de cercle fixe 70 dans le sens d'un écartement (flèche A) desdites pièces 71, 72 vers l'extérieur de part et d'autre des conduits C, C' déjà soudés.

Une fois les pièces 71, 72 écartées des conduits C, C' soudés, on entraîne en déplacement le support orbital 7 ainsi ouvert le long de la canalisation en formation pour l'amener au-delà de l'encombrement périphérique rencontré lié à la présence de vannes.

Une fois cet obstacle dépassé, les segments de cercle 71, 72 sont de nouveau entraînés en pivotement (flèche B) par rapport au segment fixe 70 pour amener leurs extrémités 71b, 72b en regard l'une de l'autre, dans la partie au-dessus des conduits à souder C', C" pour procéder au raccordement des pièces 71, 72, c'est-à-dire pour refermer le support orbital 7 pour procéder à la phase de soudage, à l'aide de moyens de raccordement et de verrouillage appropriés prévus à chaque extrémité des pièces 71 , 72. Puis, on peut procéder de manière habituelle au déplacement du dispositif de soudage le long du support orbital 7.

De préférence de manière à garantir un alignement parfait des segments 70, 71 et 72, on prévoit sur chacun desdits segments, des moyens de guidage complémentaires permettant un positionnement aligné une fois raccordés les uns aux autres.

L'invention n'est bien entendu pas limitée à l'exemple de réalisation décrit mais couvre toutes les variantes possibles dans le champ de protection des revendications.

## Revendications

1. Support dit orbital (2, 7) pour un dispositif de soudage de conduits (C, C') à souder bout à bout pour former une canalisation de type pipeline, ledit dispositif comportant au moins un chariot de soudage (1) supportant au moins une tête de soudage (6) présentant au moins une torche de soudage, ledit support orbital (2, 7) entourant les conduits à souder et étant agencé pour permettre le positionnement et l'entraînement en déplacement le long du plan de joint entre des conduits (C, C') à souder dudit dispositif de soudage (1), ledit support orbital (2, 7) étant en outre déplaçable en translation le long de la canalisation en formation,
ledit support orbital (2, 7) étant constitué d'au moins deux pièces (20) en forme de segment de cercle agencées pour pouvoir être raccordées l'une à l'autre pour former le support orbital (2, 7) autour des conduits à souder (C, C') pendant une phase de soudage et pour permettre également l'ouverture dudit support orbital (2, 7) **caractérisé en ce que** ledit support orbital (2) est constitué de deux pièces en forme de demi-cercle (20) raccordables l'une à l'autre pour former le support orbital (2) autour des conduits à souder pendant une phase de soudage, et écartables l'une de l'autre pour permettre l'ouverture du support orbital (2) au moins dans sa partie supérieure, les deux pièces en forme de demi-cercle (20) étant alors entraînables en translation le long de la canalisation en formation, de manière écartée par rapport à celle-ci, pour dépasser un encombrement à la périphérie du conduit, et **en ce que** chaque pièce (20) est portée par une potence (3) constituée d'un montant vertical (31) monté entraînable en pivotement sur un pied (4) porté par des moyens porteurs tels qu'un socle (5), et d'une traverse (32) à l'extrémité de laquelle la partie supérieure et la partie inférieure de la pièce (20) en demi-cercle sont fixées et **en ce que** le socle (5) présente un rail de guidage (51) destiné à s'étendre perpendiculairement à l'axe longitudinal des conduits (C, C'), chaque pied (4) portant une potence (3) étant monté entraînable en déplacement le long dudit rail (51), de part et d'autre des conduits.

2. Support orbital selon la revendication 1,
**caractérisé en ce qu'**il est porté par des moyens porteurs (5) entraînables en translation le long de la canalisation en formation.

3. Support orbital selon l'une des revendications précédentes,
**caractérisé en ce que** chaque pièce en demi-cercle (20) est écartable dans un plan perpendiculaire au plan dans lequel s'étendent les conduits à souder.

4. Support orbital selon l'une des revendications précédentes,
**caractérisé en ce que** les deux pièces en demi-cercle (20) sont également entraînables en rotation.

5. Support dit orbital (2, 7) pour un dispositif de soudage de conduits (C, C') à souder bout à bout pour former une canalisation de type pipeline, ledit dispositif comportant au moins un chariot de soudage (1) supportant au moins une tête de soudage (6) présentant au moins une torche de soudage, ledit support orbital (2, 7) entourant les conduits à souder et étant agencé pour permettre le positionnement et l'entraînement en déplacement le long du plan de joint entre des conduits (C, C') à souder dudit dispositif de soudage (1), ledit support orbital (2, 7) étant en outre déplaçable en translation le long de la canalisation en formation,
ledit support orbital (2, 7) étant constitué d'au moins deux pièces (20) en forme de segment de cercle agencées pour pouvoir être raccordées l'une à l'autre pour former le support orbital (2, 7) autour des conduits à souder (C, C') pendant une phase de soudage et pour permettre également l'ouverture dudit support orbital (2, 7) l'un des segments de cercle, dit fixe (70) recevant au moins à l'une de ses extrémités, montée à pivotement, une extrémité d'un autre segment de cercle dit mobile (71, 72), l'extrémité opposée du segment dit mobile (71, 72) étant au moins raccordable sur l'extrémité libre du segment de cercle dit fixe pour former le support orbital et écartable de ladite extrémité libre du segment de cercle fixe pour ouvrir ledit support au moins en partie supérieure dudit support, lors de l'entraînement en pivotement dudit segment mobile vers l'extérieur du support orbital,
**caractérisé en ce qu'**il comporte au moins trois segments de cercle (70, 71, 72), le segment de cercle dit fixe (70) étant positionné de manière à constituer la partie inférieure du support orbital (7), logée sous la canalisation en formation et l'extrémité d'un segment de cercle dit mobile (71, 72) étant montée à pivotement à chacune des extrémités du segment fixe (70), leurs extrémités opposées (71b, 72b) étant raccordables l'une à l'autre, de préférence dans la partie supérieure du support orbital (7), au-dessus de la canalisation en formation, pour former et fermer le support orbital, lesdites extrémités étant écartables l'une de l'autre pour ouvrir ledit support (7) par l'entraînement en pivotement des deux segments de cercles vers l'extérieur du support orbital (7) et **en ce que** le segment de cercle fixe (70) est porté par des moyens porteurs (5) qui présentent un rail de guidage (51) qui s'étend perpendiculairement à l'axe longitudinal des conduits et sur lequel sont montés, entrainables en déplacement le long du rail (5), de part et d'autre des conduits, deux segments de cercle (70a, 70b) qui, raccordés l'un à l'autre, forment le segment de cercle (70) dit fixe.

6. Support orbital (7) selon la revendication 5,
**caractérisé en ce que** lesdits deux segments de cercles (70a,70b) sont respectivement écartables l'un de l'autre en translation de part et d'autre de la canalisation.

7. Support orbital (7) selon l'une des revendications 5 ou 6,
**caractérisé en ce que** des moyens (8) assurant le pivotement des segments de cercle mobiles sont réalisés de manière à positionner et à aligner parfaitement les segments de cercle l'un par rapport à l'autre.

8. Support orbital (2, 7) selon l'une des revendications 1 à 7,
**caractérisé en ce que** chaque extrémité (70a', 70b', 71a, 71b, 72a, 72b) des pièces en segment de cercle (20, 70, 71, 72) est pourvue de moyens de raccordement et de verrouillage appropriés pour fermer le support (2, 7).

9. Support orbital (2, 7) selon l'une des revendications 1 à 4,
**caractérisé en ce qu'**on prévoit également aux extrémités des pièces (20, 70, 71, 72) des moyens de guidage complémentaires permettant un positionnement aligné des pièces (20, 70, 71, 72) une fois raccordées entre elles.

10. Dispositif de soudage de conduits à souder bout à bout pour former une canalisation de type pipeline, ledit dispositif comportant au moins un chariot de soudage supportant au moins une tête de soudage présentant au moins une torche de soudage, ledit dispositif de soudage étant positionné et entraîné en déplacement le long du plan de joint entre des conduits à souder à l'aide d'un support orbital, déplaçable en translation le long de la canalisation en formation,
**caractérisé en ce que** le support orbital est tel que défini selon l'une des revendications 1 à 9.

## Claims

1. Orbital carrier (2, 7) for a device for butt-welding (C, C') pipes to form a pipeline, said device comprising at least one welding carriage (1) supporting at least one welding head (6) having at least one welding torch, said orbital carrier (2, 7) surrounding the pipes to be welded and being designed to enable positioning and movement along the plane of the joint between the pipes (C, C') to be welded of said device for welding (1), said orbital carrier (2, 7) further being moveable in translation along the growing pipeline,
said orbital carrier (2, 7) being composed of at least two components (20) in the form of a segment of a circle arranged to be connectable together in order to form the orbital carrier (2, 7) around the pipes to be welded (C, C') during a welding phase and also to allow said orbital carrier (2, 7) to be opened **characterised in that** said orbital carrier (2) is composed of two half-circle formed components (20) connectable together to form the orbital carrier (2) around the pipes to be welded during a welding phase, and separable from one another in order to allow the orbital carrier (2) to be opened at least in its upper portion, the two half-circle formed components (20) then being movable along the pipeline as it grows, in a separated manner in relation to the latter, to pass an obstruction on the periphery of the pipe, **in that** each component (20) is carried by an arm (3) composed of a vertical riser (31) mounted pivotingly on a foot (4) carried by means of carrying such as a base (5), and a cross-beam (32) at the end of which the upper portion and the lower portion of the half-circle formed component (20) are fixed and **in that** the base (5) has a guide rail (51) intended to extend perpendicularly to the longitudinal axis of the pipes (C, C'), each foot (4) carrying an arm (3) being mounted movably along said rail (51), on either side of the pipes.

2. Orbital carrier according to claim 1,
**characterised in that** it is carried by carrying means(5) movable in translation along the pipeline as it grows.

3. Orbital carrier according to any of the preceding claims,
**characterised in that** each half-circle formed component (20) is separable in a plane perpendicular to the plane wherein extend the pipes to be welded.

4. Orbital carrier according to any of the preceding claims,
**characterised in that** the two half-circle formed components (20) is also rotably drivable.

5. Orbital carrier (2, 7) for a device for butt-welding (C, C') pipes to form a pipeline, said device comprising at least one welding carriage (1) supporting at least one welding head (6) having at least one welding torch, said orbital carrier (2, 7) surrounding the pipes to be welded and designed to enable positioning and movement along the plane of the joint between the pipes (C, C') to be welded of said device for welding (1), said orbital carrier (2, 7) further being movable in translation along the growing pipeline,
said orbital carrier (2, 7) being composed of at least two components (20) in the form of a segment of a circle arranged to be connectable together in order to form the orbital carrier (2, 7) around the pipes to be welded (C, C') during a welding phase and also in order to allow said orbital carrier (2, 7) to be opened, one of the fixed segments of a circle (70) receiving at least at one of its ends, mounted pivotingly, the end of another mobile segment of a circle (71, 72), the opposite end of the mobile segment (71, 72) being at least connectable to the free end of the fixed segment of a circle to form the orbital carrier and separable from said free end of the fixed segment of a circle in order to open said carrier at least in the upper portion of said carrier, during the pivotingly driving of said mobile segment towards the exterior of the orbital carrier,
**characterised in that** it comprises at least three segments of a circle (70, 71, 72), the fixed segment of a circle (70) being positioned in such a way as to form the lower portion of the orbital carrier (7), housed under the pipeline as it grows and the end of a mobile segment of a circle (71, 72) being mounted pivotingly at each of the ends of the fixed segment (70), their opposite ends (71b, 72b) being connectable together, preferably in the upper portion of the orbital carrier (7), above the growing pipeline, in order to form and close the orbital carrier, said ends being separable from one another in order to open said carrier (7) by the pivotingly driving of the two segments of a circle towards the exterior of the orbital carrier (7), and **in that** the fixed segment of a circle (70) is carried by means of carrying (5) which have a guide rail (51) which extends perpendicularly to the longitudinal axis of the pipes and whereon are mounted, movable along the rail (5), on either side of the pipes, two segments of a circle (70a, 70b) which, connected together, form the fixed segments of a circle (70).

6. Orbital carrier (7) according to claim 5,
**characterised in that** said two segments of a circle (70a, 70b) can respectively be separated from one another in translation on either side of the pipeline.

7. Orbital carrier (7) according to any of claims 5 or 6,
**characterised in that** means (8) providing for the pivoting of the mobile segments of a circle are carried out in such a way as to position and perfectly align the segments of a circle in relation to one other.

8. Orbital carrier (2, 7) according to any of claims 1 to 7,
**characterised in that** each end (70a', 70b', 71a, 71b, 72a, 72b) of the components in a segment of a circle (20, 70, 71, 72) is provided with suitable means for connecting and locking in order to close the carrier (2, 7).

9. Orbital carrier (2, 7) according to any of claims 1 to 4,
**characterised in that** it is also provided at the ends of the components (20, 70, 71, 72) additional means for guiding allowing for an aligned positioning of the components (20, 70, 71, 72) once they are connected together.

10. Device for butt-welding pipes to form a pipeline, said device comprising at least one welding carriage supporting at least one welding head having at least one welding torch, said device for welding being positioned and moved along the plane of the joint between the pipes to be welded using an orbital carrier, movable in translation along the growing pipeline,
**characterised in that** the orbital carrier is such as defined according to any of claims 1 to 9.

## Patentansprüche

1. Orbitalträger (2, 7) für eine Schweißvorrichtung von Leitungen (C, C') zum Stumpfschweißen, um eine Kanalisierung des Typs Pipeline zu bilden, wobei die Vorrichtung mindestens einen Schweißwagen (1) umfasst, der mindestens einen Schweißkopf (6) trägt, der mindestens einen Schweißbrenner aufweist, wobei der Orbitalträger (2, 7) die zu schweißenden Leitungen umgibt und angeordnet ist, um die Positionierung und die Verschiebung entlang der Verbindungsfläche zwischen zu schweißenden Leitungen (C, C") der Schweißvorrichtung (1) zu ermöglichen, wobei der Orbitalträger (2, 7) außerdem in Translation entlang der sich bildenden Kanalisation bewegbar ist,
wobei der Orbitalträger (2, 7) mindestens aus zwei Einheiten (20) in Form eines Kreissegments besteht, angeordnet, um miteinander verbunden werden zu können, um den Orbitalträger (2, 7) um die zu schweißenden Leitungen (C, C') während einer Schweißphase zu bilden, und um auch die Öffnung des Orbitalträgers (2, 7) zu ermöglichen, **dadurch gekennzeichnet, dass** der Orbitalträger (2) aus zwei Einheiten in Form eines Halbkreises (20) gebildet ist, die miteinander verbunden werden können, um den Orbitalträger (2) um zu schweißende Leitungen während einer Schweißphase zu bilden, und voneinander entfernt werden können, um die Öffnung des Orbitalträgers (2) mindestens in seinem oberen Teil zu ermöglichen, wobei die zwei Einheiten in Form eines Halbkreises (20) dann in Translation entlang der sich bildenden Kanalisation, entfernt von dieser, verschoben werden können, um eine Abmessung am Umfang der Leitung zu überschreiten, und dadurch, dass jede Einheit (20) auf einem Ausleger (3) aufliegt, der aus einem vertikalen Ständer (31) besteht, der drehbar auf einem Fuß (4) montiert ist, der von Tragmitteln wie z.B. einem Sockel (5) getragen wird, und einem Querträger (32), an dessen Ende der obere Teil und der unter Teil der Einheit (20) in Form eines Halbkreises befestigt sind, und, dass der Sockel (5) eine Führungsschiene (51) aufweist, die dazu vorgesehen ist, sich senkrecht zur Längsachse der Leitungen (C, C") zu erstrecken, wobei jeder Fuß (4) einen Ausleger (3) trägt, der verschiebbar entlang der Schiene (51) auf beiden Seiten der Leitungen montiert ist.

2. Orbitalträger nach Anspruch 1,
**dadurch gekennzeichnet, dass** er von Tragmittel (5) getragen wird, die entlang der sich bildenden Kanalisation in Translation angetrieben werden können.

3. Orbitalträger nach einem der vorhergehenden Ansprüche,
**dadurch gekennzeichnet, dass** jede Einheit in Form eines Halbkreises (20) in einer Ebene senkrecht zur Ebene entfernbar ist, in der sich die zu schweißenden Leitungen erstrecken.

4. Orbitalträger nach einem der vorhergehenden Ansprüche,
**dadurch gekennzeichnet, dass** die zwei Einheiten (20) ebenfalls drehbar sind.

5. Orbitalträger (2, 7) für eine Schweißvorrichtung von Leitungen (C, C') zum Stumpfschweißen, um eine Kanalisation des Typs Pipeline zu bilden, wobei die Vorrichtung mindestens einen Schweißwagen (1) umfasst, der mindestens einen Schweißkopf (6) trägt, der mindestens einen Schweißbrenner aufweist, wobei der Orbitalträger (2, 7) die zu schweißenden Leitungen umgibt und angeordnet ist, um die Positionierung oder die Verschiebung entlang der Verbindungsfläche zwischen zu schweißenden Leitungen (C, C") der Schweißvorrichtung (1) zu ermöglichen, wobei der Orbitalträger (2, 7) außerdem in Translation entlang der sich bildenden Kanalisation bewegbar ist,
wobei der Orbitalträger (2, 7) mindestens aus zwei Einheiten (20) in Form eines Kreissegments besteht, angeordnet, um miteinander verbunden werden zu können, um den Orbitalträger (2, 7) um zu schweißende Leitungen (C, C') während einer Schweißphase zu bilden, und um auch die Öffnung des Orbitalträgers (2, 7) zu ermöglichen, wobei eines der als fest bezeichneten Kreissegmente (70) mindestens an einem seiner Enden, drehbar montiert, ein Ende eines anderen, als beweglich bezeichneten Kreissegments (71, 72) aufnimmt, wobei das gegenüberliegende Ende des als beweglich bezeichneten Kreissegments (71, 72) mindestens auf dem freien Ende des als fest bezeichneten Kreissegments verbunden werden kann, um den Orbitalträger zu bilden, und vom freiem Ende des festen Kreissegments entfernt werden kann, um den Träger mindestens im oberen Teil des Trägers zu öffnen, wenn das bewegliche Segment zur Außenseite des Orbitalträgers gedreht wird.
**dadurch gekennzeichnet, dass** es mindesten drei Kreissegmente (70, 71, 72) umfasst, wobei das feste Kreissegment (70) so positioniert ist, dass es den unteren Teil des Orbitalträgers (7) bildet, angebracht unter der sich bildenden Kanalisation, und wobei das Ende eines als beweglich bezeichneten Kreissegments (71, 72) drehbar auf jedem der Enden des festen Segments (70) montiert ist, wobei ihre gegenüberliegenden Enden (71b, 72b) miteinander verbunden werden können, vorzugszueise im oberen Teil des Orbitalträgers (7), über der sich bildenden Kanalisation, um den Orbitalträger zu bilden und zu schließen, wobei die Enden voneinander entfernbar sind, um den Träger (7) durch die Drehung der zwei Kreissegmente an die Außenseite des Orbitalträgers (7) zu öffnen, und, dass das feste Kreissegment (70) von Tragmitteln (5) getragen wird, die eine Führungsschiene (51) aufweisen, die sich senkrecht zur Längsachse der Leitungen erstreckt, und auf denen, entlang der Schienen (5), verschiebbar, auf beiden Seiten der Leitungen zwei Kreissegmente (70a, 70b) montiert sind, die, miteinander verbunden, das als fest bezeichnete Kreissegment (70) bilden.

6. Orbitalträger (7) nach Anspruch 5,
**dadurch gekennzeichnet, dass** die zwei Kreissegmente (70a, 70b) jeweils auf beiden Seiten der Kanalisation voneinander entfernbar sind.

7. Orbitalträger (7) nach einem der Ansprüche 5 oder 6,
**dadurch gekennzeichnet, dass** die Mittel (8), die die Drehung der beweglichen Kreissegmente sicherstellen, so gebildet sind, dass sie die Kreissegmente in Bezug aufeinander perfekt positionieren und ausrichten.

8. Orbitalträger (2, 7) nach einem der Ansprüche 1 bis 7,
**dadurch gekennzeichnet, dass** jedes Ende (70a', 70b', 71a, 71b, 72a, 72b) der Einheiten in Form eines Kreissegments (20, 70, 71, 72) mit Mitteln zur Verbindung und zur Blockierung versehen ist, die geeignet sind, um den Träger (2, 7) zu schließen.

9. Orbitalträger (2, 7) nach einem der Ansprüche 1 bis 4,
**dadurch gekennzeichnet, dass** auch an den Enden der Einheiten (20, 70, 71, 72) zusätzliche Führungsmittel vorgesehen sind, die eine ausgerichtete Positionierung der Einheiten (20, 70, 71, 72) ermöglichen, nachdem sie untereinander verbunden sind.

10. Schweißvorrichtung von Leitungen zum Stumpfschweißen, um eine Kanalisation des Typs Pipeline zu bilden, wobei die Vorrichtung mindestens einen Schweißwagen umfasst, der mindestens einen Schweißkopf trägt, der mindestens einen Schweißbrenner aufweist, wobei die Schweißvorrichtung entlang der Verbindungsfläche zwischen den zu schweißenden Leitungen mit Hilfe eines Orbitalträgers positioniert und geführt ist, drehbar entlang der sich bildenden Kanalisation,
**dadurch gekennzeichnet, dass** der Orbitalträger wie nach einem der Ansprüche 1 bis 9 definiert ist.
